# EUROPEAN PATENT SPECIFICATION

(11) **EP 1 247 449 B1**
(45) Date of publication and mention of the grant of the patent: **11.02.2004**
(21) Application number: 02015786.3
(22) Date of filing: 21.12.1998
(51) Int. Cl.: A01N 37/20

(54) **Fungicidal composition containing an N-Acetonylbenzamide and folpet**
Fungizide Mischung, enthaltend ein N-Acetylbenzamid und Folpet
Composition fongicide, contenant une N-acétylbenzamide et du Folpet

(30) Priority: 27.01.1998 US 72725 P; 04.09.1998 US 148604
(43) Date of publication of application: 09.10.2002
(62) Divisional of application: 98310539.6
(73) Proprietor: Dow AgroSciences LLC, Indianapolis, Indiana 46268 (US)
(72) Inventor: Young, David Hamilton, Carmel, Indiana 46033 (US); Wilson, Willie Joe, Chalfont, Pennsylvania 18914 (US); Egan, Anne Ritchie, Fort Washington, Pennsylvania 19034 (US); Michelotti, Enrique Luis, Fort Washington, Pennsylvania 19034 (US)
(74) Representative: Huber, Bernhard, Dipl.-Chem.

(56) References cited:
- EP-A- 0 753 258
- EP-A- 0 815 727
- US-A- 5 304 572
- BRITISH CROP PROTECTION COUNCIL: " The Pesticide manual, Twelfth Edition" , C.D.S. TOMLIN (ED) , FARNHAM, GB XP002209902 see entry n°390, p.468-470

## Description

The present invention relates to a new fungicidal composition and its use as a method for controlling phytopathogenic fungi on plants.

It is always desirable to improve products which can be used by growers in order to combat fungal diseases of crops, and in particular diseases caused by fungi in the class *Oomycetes*.

It is also always desirable to reduce the doses of chemical products spread into the environment to combat fungal attacks on crops, in particular by reducing the application doses of the products.

It is also always desirable to increase the number of antifungal products available to growers in order that they will find, among these products, the one which is best suited to the grower's specific use.

One objective of the invention is thus to provide a novel fungicidal composition which is useful against the problems outlined above.

Another objective of the invention is to propose a novel fungicidal composition which is useful in the preventive and curative treatment of diseases caused by fungi of the class *Oomycetes*.

Still another objective of the invention is to propose a novel fungicidal composition which is of improved efficacy against mildew and/or late blight caused by *Oomycetes*.

Yet another objective of the invention is to propose a novel fungicidal composition which is of improved efficacy against downy mildew in grapes and other crops and/or late blight in tomatoes and potatoes.

It has now been found that these objectives may be achieved, partly or totally, by means of the fungicidal composition according to the present invention.

U.S. patents 5,304,572 and 5,677,333 disclose applying mixtures of the N-acetonylbenzamides disclosed therein with other fungicidal compounds. It has now been discovered that application of the N-acetonylbenzamides disclosed in these patents in combination with selected other fungicidal compounds provides unexpectedly high fungicidal activity and is effective in controlling phytopathogenic fungi at lower N-acetonylbenzamide dosage rates than those disclosed in the US 5,304,572 patent. Although US 5,677,333 discloses the use of N-acetonylbenzamides in combination with ethylene bisdithiocarbamates, cymoxanil and dimethomorph to provide unexpectedly high fungicidal activity, the synergistic combinations of this invention are not disclosed or suggested in that patent.

In a first embodiment of this invention, there is provided a composition comprising
(a) a fungicidally effective amount of a first fungicidally active compound which is N-[3'- (1'-chloro-3'-methyl-2'-oxopentan)]-3,5-dichloro-4-methylbenzamide, having the formula 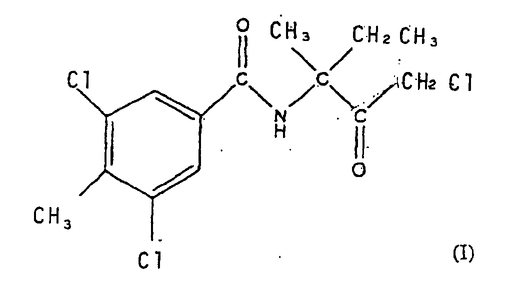
(b) a second fungicidally active compound which is folpet, and
(c) an agronomically acceptable carrier.

In a second embodiment of this invention, there is provided a method for controlling phytopathogenic fungi on a plant comprising the application of
(a) a fungicidally effective amount of a first fungicidally active compound which is N-[3'-(1'-chloro-3'-methyl-2'oxopentan)]-3,5-dichloro-4-methylbenzamide,
(b) a second fungicidally active compound which is folpet, and
(c) an agronomically acceptable carrier.

The method of the present invention may optionally further comprise application of other compounds having biological activity, for example, additional fungicidally active compounds or compounds having herbicidal activity or insecticidal activity, to the plant seed, to the plant foliage or to the growth medium for the plant.

The method of the present invention is useful for the control of phytopathogenic fungi on crops and the first and second fungicidally active compounds may be applied as a soil fungicide, as a seed protectant, as a foliar fungicide or as a combination thereof. In a preferred embodiment, the first and second fungicidally active compounds are applied to a plant growth medium, to the plant seed or to plant foliage at dosage rates of from 2 parts by weight (pbw) to 90 pbw, more preferably from 5 pbw to 75 pbw, of the first fungicidally active compound per 100 pbw of the combined amount of first and second fungicidally active compounds and from 10 pbw to 98 pbw, more preferably from 25 pbw to 95 pbw, of the second fungicidally active compound per 100 pbw of the combined amount of first and second fungicidally active compounds.

As a soil fungicide, the first and second fungicidally active compositions can be incorporated in the soil or applied to the surface of the soil at a dosage rate of about 0.25 kg to 5 kg of the first fungicidally active compound and from 0.25 kg to 5 kg of the second fungicidally active compound per hectare.

As a seed protectant, the first and second fungicidally active compounds are coated on seed at a dosage rate of about 0.5 kilograms (kg) to 5 kg of the first fungicidally active compound and from 0.5 kg to 5 kg of the second fungicidally active compound per 100 kg seed.

As a foliar fungicide, the first and second fungicidally active compounds are applied to plant foliage at a dosage rate of from 0.01 kg per hectare to 5 kg per hectare of the first fungicidally active compound, and a dosage rate of from 0.01 kg per hectare to about 5 kg per hectare of the second fungicidally active compound. In a preferred embodiment, the first fungicidally active compound is applied to plant foliage at a dosage rate of from 0.05 kg per hectare to about 0.5 kg per hectare. In a preferred embodiment, the second fungicidally active compound is applied to plant foliage at a dosage rate of 0.05 kg per hectare to 5.0 kg per hectare. The first and second fungicidally active compounds can be applied to plant foliage as fungicidal sprays by methods commonly employed, such as conventional high-gallonage hydraulic sprays, low-gallonage sprays, air-blast, aerial sprays and dusts. While the dilution and rate of application will depend upon the type of equipment employed, the method and frequency of application desired and diseases to be controlled, the effective amount is typically from about 0.1 kg to about 5.0 kg, preferably 0.2 kg to 5.0 kg, of both the first and second active compounds per hectare.

The first and second fungicidally active compounds may be applied simultaneously or sequentially.

In a preferred embodiment, the first and second fungicidally active compounds are simultaneously applied to plant growth medium, the plant seed, plant foliage or a combination thereof as a composition comprising a mixture of the first fungicidally active compound and second fungicidally active compound. In the preferred embodiments, the mixture includes from 2 pbw to 90 pbw of a first fungicidally active compound and from 10 pbw to 98 pbw of a second fungicidally active compound per 100 pbw of the mixture.

In an alternative embodiment, the first and second fungicidally active compounds are applied sequentially to the plant seed. plant foliage or plant growth medium, with application of the second-applied compound following application of the first-applied compound by up to 72 hours. The compounds may be applied in either order: either the first fungicidally active compound followed by the second fungicidally active compound or, alternatively, as application of the second fungicidally active compound followed by the first fungicidally active compound.

The method of the present invention is useful in controlling certain phytopathogenic fungi, particularly fungi of the class *Oomycetes,* and provides high fungicidal activity and relatively low phytotoxicity. The method of the present invention is particularly effective in controlling *Oomycete* fungi of the genera *Phytophthora, Plasmopara, Peronospora, Albugo* and *Pseudoperonospora*, and even more particularly against the organisms of those genera that cause diseases such as late blight in tomatoes and potatoes and downy mildew in grapes and other crops, including, for example, *Phytophthora infestans*, *Plasmopara viticola* and *Pseudoperonospora cubensis*.

For each of the above disclosed purposes, the first and second fungicidally active compounds can be used in the technical or pure form as prepared, as solutions or as formulations. The compounds are usually taken up in a carrier or are formulated so as to render them suitable for subsequent use as fungicides. For example, the compounds can be formulated as wettable powders, dry powders, emulsifiable concentrates, dusts, granular formulations, aerosols, or flowable emulsion concentrates. In such formulations, the compounds are extended with a liquid or solid carrier and, when dried, suitable surfactants are incorporated. It is usually desirable, particularly in the case of foliar spray formulations, to include adjuvants. such as wetting agents, spreading agents, dispersing agents, stickers, adhesives and the like in accordance with agricultural practices. Such adjuvants commonly used in the art can be found in McCutcheon's "Emulsifiers and Detergents", McCutcheon's "Emulsifiers and Detergents/Functional Materials" and McCutcheon's "Functional Materials" all published annually by McCutcheon Division of MC Publishing Company (New Jersey).

In general, the compositions utilized in this invention can be dissolved in appropriate solvents such as acetone, methanol, ethanol, dimethylformamide or dimethyl sulfoxide and such solutions extended with water. The concentrations of the combined first and second active compounds in the solution can vary from 1% to 90% with a preferred range being 5% to 50%.

For the preparation of emulsifiable concentrates, the compositions used in the invention can be dissolved in suitable organic solvents or a mixture of solvents, together with an emulsifying agent which permits dispersion of the first and second active compounds in water. The concentration of the combined first and second active compounds in emulsifiable concentrates is usually 10% to 90% and in flowable emulsion concentrates, this can be as high as 75%. Wettable powders suitable for spraying, can be prepared by admixing the composition with a finely divided solid, such as clays, inorganic silicates and carbonates, and silicas and incorporating wetting agents, sticking agents, and/or dispersing agents in such mixtures. The concentration of the combined first and second active compounds in such formulations is usually in the range of 20% to 98%, preferably 40% to 75%.

Dusts are prepared by mixing the composition of the present invention, or salts and complexes thereof, with finely divided inert solids which can be organic or inorganic in nature. Inert materials useful for this purpose include botanical flours, silicas, silicates, carbonates and clays. One convenient method of preparing a dust is to dilute a wettable powder with a finely divided carrier. Dust concentrations containing 20% to 80% of the combined first and second active compounds are commonly made and are subsequently diluted to 1% to 10% use concentration.

The method of the present invention, wherein N-3'-(1'-chloro-3'-methyl-2'-oxopentan)]-3,5-dichloro-4-methylbenzamide and folpet as the second fungicidally active compound are applied to plant seed. plant foliage or to a plant growth medium, unexpectedly provides higher fungicidal activity than the same compounds used separately.

The results provided by the mixtures were compared with the predicted results that were calculated using the formula set forth by S.R. Colby in Weeds 1967, 15, 20-22 ("Colby's Formula") from the results obtained using each of the compounds individually. The predicted results are also provided in the following Examples. These examples. tables and experimental procedures are provided for guidance to the practitioner and are not meant to limit the scope of the invention which is defined by the claims.

### Example 1: N-[3'-(1'-chloro-3'-methyl-2'-oxopentan)]-3,5-dichloro-4-methylbenzamide (Compound A) + Folpet (Compound G) Tests Against CDM

The results in the accompanying Table 1 are for N-[3'-(1'-chloro-3'-methyl-2'-oxopentan)]-3,5-dichloro-4-methylbenzamide and folpet. The test was conducted as using the standard protocol for cucumber downy mildew.

Two to three week old Bush Champion cucumbers and 2 week old Patio tomatoes were sprayed with the fungicidal compounds as protectant sprays. The plants were inoculated with cucumber downy mildew (CDM), *Pseudoperonospora cubensis*, and tomato late blight (TLB), *Phytophthora infestans*, one day after spraying.

N-[3'-(1'-chloro-3'-methyl-2'-oxopentan)]-3,5-dichloro-4-methylbenzamide was extremely effective against the tomato late blight fungus in this test. N-[3'-(1'-chloro-3'-methyl-2'-oxopentan)]-3,5-dichloro-4-methylbenzamide alone at all rates tested gave 95% control or better. Since excellent results were observed with N-[3'-(1'-chloro-3'-methyl-2'-oxopentan)]-3,5-dichloro-4-methylbenzamide at the rates tested, no synergism could be detected.

Cucumber downy mildew control with N-[3'-(1'-chloro-3'-methyl-2'-oxopentan)]-3,5-dichloro-4-methylbenzamide ranged from 63 to 82%. There was a suggestion of synergism at some rates. The data suggested that the N-[3'-(1'-chloro-3'-methyl-2'-oxopentan)]-3,5-dichloro-4-methylbenzamide rates should be lowered and the trial repeated.

Using the Colby equation, E = X + Y - XY/100, results suggest that ratios or 1:2.25 to 1:4.5 were potentially synergistic. The results of the calculations are recorded in CDM calc. column as shown in Table 1. Treatments were evaluated as a 3-day residual application.

Synergism was observed at the following ratios of N-[3'-(1'-chloro-3'-methyl-2'-oxopentan)]-3,5-dichloro-4-methylbenzamide to folpet for CDM disease: 1:4.5, 1:9 and 1:18. The results are reported in Table 1.

**Table 1 -**

| Cucumber Downy Mildew Control | | | | |
|---|---|---|---|---|
| Treatment | Kg ai/ha | Number of Infection Sites | % Control Observed | % Control Calculated |
| Cmpd. G | 0.113 | 16 | 28.8 | |
| | 0.225 | 22.2 | 0 | |
| | 0.45 | 19.2 | 8.5 | |
| Cmpd. A | 0.025 | 5.4 | 74.3 | |
| | 0.05 | 3.2 | 84.8 | |
| | 0.1 | 0.4 | 98.1 | |
| Cmpd. A + Cmpd. G | 0.025 + 0.225 | 3.6 | 82.9 | 74.3 |
| | 0.025 + 0.45 | 2.2 | 89.5 | 76.5 |
| Cmpd. A + Cmpd. G | 0.05 + 0.225 | 2.2 | 89.5 | 84.8 |
| | 0.05 + 0.45 | 2.2 | 89.5 | 84.8 |

### Example 2: N-[3'-(1'-chloro-3'-methyl-2'-oxopentan)]-3,5-dichloro-4-methylbenzamide (Compound A) + Folpet (Compound G) Tests Against PLB

Three to four week old potato seedlings were sprayed with a series of doses of folpet and N-[3'-(1'-chloro-3'-methyl-2'-oxopentan)]-3,5-dichloro-4-methylbenzamide. Individual treatments and combination treatments were compared for biological efficacy against *Phytophthora infestans* on potatoes (PLB). Fungicide solutions were sprayed and inoculated one day after the application. Inoculation was completed with a spore suspension of 30-40 x 10⁴ spores/ml. The plants were placed in a misting cabinet for 24 hours. Following the infection period, plants were placed in a constant temperature chamber for the duration.

One day following application, the plants were inoculated with spore suspensions of the respective diseases. The plants were incubated in mist cabinets for twenty-four hours and then placed in control temperature chambers for the duration of the experiment.

Disease pressure was very high in this test as is evidenced by the exceptionally low level of control expressed by the individual treatment. However the combinations were more active than either of the fungicides used alone.

N-[3'-(1'-chloro-3'-methyl-2'-oxopentan)]-3,5-dichloro-4-methylbenzamide and folpet at ratios of 1:2.25, 1:4.5 and 1:9 exhibited synergism in this test. The results are reported in Table 2.

**Table 2 -**

| Potato Late Blight Control | | | |
|---|---|---|---|
| Treatment | Kg ai/ha | % Control Observed | % Control Calculated |
| Cmpd. G | 0.225 | 0 | |
| | 0.45 | 3.5 | |
| Cmpd. A | 0.05 | 12 | |
| | 0.10 | 16 | |
| Cmpd. A + Cmpd. G | 0.05 + 0.225 | 32 | 12 |
| | 0.05 + 0.45 | 20 | 15 |
| Cmpd. A + Cmpd. G | 0.10 + 0.225 | 21 | 16 |
| | 0.10 + 0.45 | 39 | 19 |

## Claims

1. A fungicidal composition comprising synergistic fungicidally effective amounts of
(a) a first fungicidally active compound which is N-[3'-(1'-chloro-3'-methyl-2'-oxopentan)]-3,5-dichloro-4-methylbenzamide,
(b) a second fungicidally active compound which is folpet, and
(c) an agronomically acceptable carrier.

2. A method for controlling phytopathogenic fungi on a plant comprising the application of a synergistic fungicidally effective amount of the composition of claim 1.

3. The method of claim 2 wherein the phytopathogenic fungi belong to the class Oomycetes and are of the genera Phytophthora, Plasmopara, Peronospora, Albugo or Pseudoperonospora.

4. The method of claim 2 wherein the plant is a potato plant, a tomato plant, a grape plant or a cucumber plant.

5. The method of claim 2 wherein the amounts of the first and second fungicidally active compounds applied comprise from 2 parts by weight to 90 parts by weight of the first fungicidally active compound and from 10 parts by weight to 98 parts by weight of the second fungicidally active compound per 100 parts by weight of the combined amount of the first and second fungicidally active compounds.

## Patentansprüche

1. Fungizidzusammensetzung, umfassend synergistisch fungizid wirksame Mengen
(a) einer ersten fungizid wirksamen Verbindung, welche N-[3'-(1'-Chlor]-3'-methyl-2'-oxopentan)]-3,5-dichlor-4-methylbenzamid ist,
(b) einer zweiten fungizid wirksamen Verbindung, welche Folpet ist, und
(c) eines landwirtschaftlich akzeptablen Trägers.

2. Verfahren zur Bekämpfung phytopathogener Pilze auf einer Pflanze umfassend das Aufbringen einer synergistisch fungizid wirksamen Menge der Zusammensetzung nach Anspruch 1.

3. Verfahren nach Anspruch 2, worin die phytopathogenen Pilze zur Klasse der Oomyzeten gehören und von den Gattungen Phytophthora, Plasmopara, Peronospora, Albugo oder Pseudoperonospora sind.

4. Verfahren nach Anspruch 2, worin die Pflanze eine Kartoffelpflanze, eine Tomatenpflanze, eine Weinrebenpflanze oder eine Gurkenpflanze ist.

5. Verfahren nach Anspruch 2, worin die aufgetragenen Mengen der ersten und zweiten fungizid wirksamen Verbindungen von 2 Gewichtsteile bis 90 Gewichtsteile der ersten fungizid wirksamen Verbindung und von 10 Gewichtsteile bis 98 Gewichtsteile der zweiten fungizid wirksamen Verbindung pro 100 Gewichtsteile der kombinierten Menge der ersten und zweiten fungizid wirksamen Verbindungen umfassen.

## Revendications

1. Composition fongicide comprenant, en des quantités appropriées pour qu'ils aient un effet fongicide synergique :
a) un premier composé à activité fongicide, qui est du N-[3'-(1'-chloro-3'-méthyl-2'-oxopentyl)]-3,5-dichloro-4-méthylbenzamide,
b) un deuxième composé à activité fongicide, qui est du folpet,
c) et un véhicule admissible du point de vue agronomique.

2. Procédé de lutte contre des champignons phytopathogènes sur une plante, qui comporte l'application d'une composition conforme à la re-vendication 1, en une quantité appropriée pour qu'elle ait un effet fongicide synergique.

3. Procédé conforme à la revendication 2, dans lequel les champignons phytopathogènes appartiennent à la classe des oomycètes et au genre Phytophthora, Plasmopara, Peronospora, Albugo ou Pseudopero-nospora.

4. Procédé conforme à la revendication 2, dans lequel la plante est un plant de pomme de terre, un plant de tomate, un plant de vigne ou un plant de concombre.

5. Procédé conforme à la revendication 2, dans lequel les quantités appliquées des premier et deuxième composés à activité fongicide valent de 2 à 90 parties en poids du premier composé à activité fongicide et de 10 à 98 parties en poids du deuxième composé à activité fongicide, pour 100 parties en poids, au total, des premier et deuxième composés à activité fongicide.
